(19) **Europäisches Patentamt**

**European Patent Office**

**Office européen des brevets**

(11) Publication number: **0 439 127 A2**

(12) # EUROPEAN PATENT APPLICATION

(21) Application number: **91100779.7**

(51) Int. Cl.5: **G01J 4/00**

(22) Date of filing: **22.01.91**

(30) Priority: **22.01.90 US 468397**

(43) Date of publication of application:
**31.07.91 Bulletin 91/31**

(84) Designated Contracting States:
**DE FR GB SE**

(71) Applicant: **Hewlett-Packard Company**
**Mail Stop 20 B-O, 3000 Hanover Street**
**Palo Alto, California 94304(US)**

(72) Inventor: **Heffner, Brian Lee**
**925 Hudson Street**
**Redwood City, CA 94061(US)**

(74) Representative: **Liesegang, Roland, Dr. et al**
**BOEHMERT & BOEHMERT**
**Widenmayerstrasse 4/I**
**W-8000 München 22(DE)**

(54) **Fast optical polarization meter.**

(57) An optical polarization meter measures completely the polarization of a light beam by splitting it into four beams, passing three of the beams through optical elements, measuring the transmitted intensity of all four beams by means of electronic sensors, and calculating the Stokes parameters from the results. One of the optical elements is a horizontal linear polarizer, the second is a linear polarizer with a polarization direction oriented at a 45 degree angle about the optic axis relative to the first, and the third element is a circular polarizer. The measurement of the fourth beam provides a normalizing factor proportional to the incident total intensity that enables one to determine all four Stokes parameters, i.e. the complete state of polarization. This determination is done electronically. The input beam enters the device through a single-mode optical fiber that acts as a spatial filter which, together with other optical elements, controls the position and alignment of the beams through the device.

Figure 1

# FAST OPTICAL POLARIZATION METER

## BACKGROUND OF THE INVENTION

This invention pertains generally to the field of devices for measuring the polarization of a beam of light, and more particularly, to such devices that are capable of detecting rapid changes in the polarization of the light beam.

The traditional method for measuring the polarization of a light beam, described in many treatises and textbooks, is to place a waveplate and a linear polarizer in the optical path. The waveplate is designed to be capable of rotation about the optic axis, and may be a quarter-wave plate typically, or a waveplate of variable thickness such as a Babinet or Soleil compensator. It is sometimes convenient to also make the polarizer capable of rotation. An optical sensor is located downstream to measure the intensity of light transmitted by the waveplate and the polarizer. The waveplate is rotated to a plurality of angular positions about the optic axis relative to the polarizer, and the transmitted light intensity is measured at these positions. Intensity measurements at a minimum of four different angular positions are required for a complete polarization determination. Using well-known methods the polarization of the light beam may be computed from these measurements. For example, United States Patent No. 4,306,809 (Azzam) describes a device having optical elements that are rotated automatically for determining the polarizing properties of a material by measuring the Mueller matrix. Obviously this apparatus may also be used as a polarization meter.

This technique has the obvious drawback that it requires the mechanical movement of the waveplate, and the speed of the measurement is limited by the speed with which the waveplate can be rotated. Therefore such devices are not effective for light beams in which the polarization varies faster than this limit. The limiting frequency of polarization variation that can be measured in this way is in the kilohertz range at the current state of this technology.

A second technique, termed the "heterodyne method", for measuring optical polarizations is disclosed in United States Patent No. 4,671,657 (Calvani et al.) and European Patent Application No. 87111393.2 (Calvani at al.). In this method the light beam is split into two branches and then recombined downstream. A linear polarizer is inserted in one branch to produce a reference beam. The other branch passes through a frequency shifting device, typically an acousto-optic transducer, and the polarization of the original beam may be determined by measuring the beat signals in the resulting light beam. The measurement frequency of this type of device is also limited, in this case by the maximum acoustic frequency, generally less than 100 MHz. In addition the accuracy of this device, like any interferometer, is susceptible to mechanical vibrations and misalignment.

A measurement technique that overcomes some of these limitations is disclosed in United States Patent No. 4,681,450 (Azzam) and the article entitled "Construction, Calibration, and Testing of a Four-Detector Photopolarimeter", by R. M. A. Azzam et al. (Rev. Sci. Instruments 59(1), January 1988, pages 84-88). This device includes a series of four photodetectors serially located in the path of the light beam being measured. The beam successively strikes each of the first three detectors obliquely, and is partially specularly reflected. The detector generates a signal proportional to the absorbed part of the beam energy. The beam is substantially fully absorbed in the fourth detector. The signals generated by the four photodetectors may be used to calculate the Stokes parameters of the incident beam, which completely determines its polarization. Since this device does not involve any mechanical movement, clearly it does not have the frequency limitations of the previously described systems.

The Azzam device does however suffer from the drawbacks that the polarizing effects at each of the photodetector surface reflections are substantially wavelength-dependent, and the device must be calibrated by using four calibration light beams of different known polarizations. This calibration must be repeated for each different wavelength. Furthermore at least one of the calibration beams must not be linearly polarized; such beams are inconvenient to produce accurately. Calibration of the Azzam device is thus a formidable task. These drawbacks limit the efficiency and accuracy of the device, particularly when the polarizations of several different light beams are measured.

Another electronic device for polarization measurements is described in United States Patent No. 4,158,506 (Collett). This apparatus is claimed to be suitable for measuring the polarization of nanosecond optical pulses, and comprises an assembly of six optical detectors positioned behind a corresponding assembly of six optical polarizer elements. The light beam passes through all of the polarizer elements simultaneously, and the transmitted light intensity from each element is detected and measured by the corresponding photodetector. The electrical signals from the six detectors may be used to determine the

2

Stokes parameters of the incident beam.

The operation of the Collett device obviously depends critically on the position and alignment of the light beam relative to the optical elements and detectors; all the elements should be detecting the same beam. It is not clear from that disclosure how this alignment is to be achieved.

## SUMMARY OF THE INVENTION

The present invention measures completely the polarization of a light beam by splitting it into four beams, passing three of the beams through optical elements, and measuring the transmitted intensity of all four beams by means of electronic sensors. The Stokes parameters are calculated from the results of these measurements. One of the optical elements is a horizontal linear polarizer, the second is a linear polarizer with a polarization direction oriented at a 45 degree angle about the optic axis relative to the first, and the third element is a circular polarizer. The measurement of the fourth beam provides a normalizing factor proportional to the incident total intensity that enables one to determine all four Stokes parameters. This determination is done electronically. The input beam enters the device through a single-mode optical fiber that acts as a spatial filter which, together with other optical elements, controls the position and alignment of the beams through the device.

It is an object of this invention to provide an optical polarization meter that is capable of measuring completely the polarizations of rapidly varying optical signals.

Another object is to provide a meter that will measure such polarizations over a substantial range of wavelengths.

A further object of the invention is to provide a meter that is convenient to calibrate accurately.

These and other objects, advantages, characteristics and features of this invention may be better understood by examining the following drawings together with the detailed description of the preferred embodiment.

## BRIEF DESCRIPTION OF THE DRAWINGS

Figure 1 is a schematic diagram of the optical polarization meter disclosed herein, showing the optical path of the beam and the optical and electronic elements of the invention.

Figure 2 is a schematic diagram in perspective view of an alternative version of the optical polarization meter showing the essential functional elements.

## DESCRIPTION OF THE PREFERRED EMBODIMENT

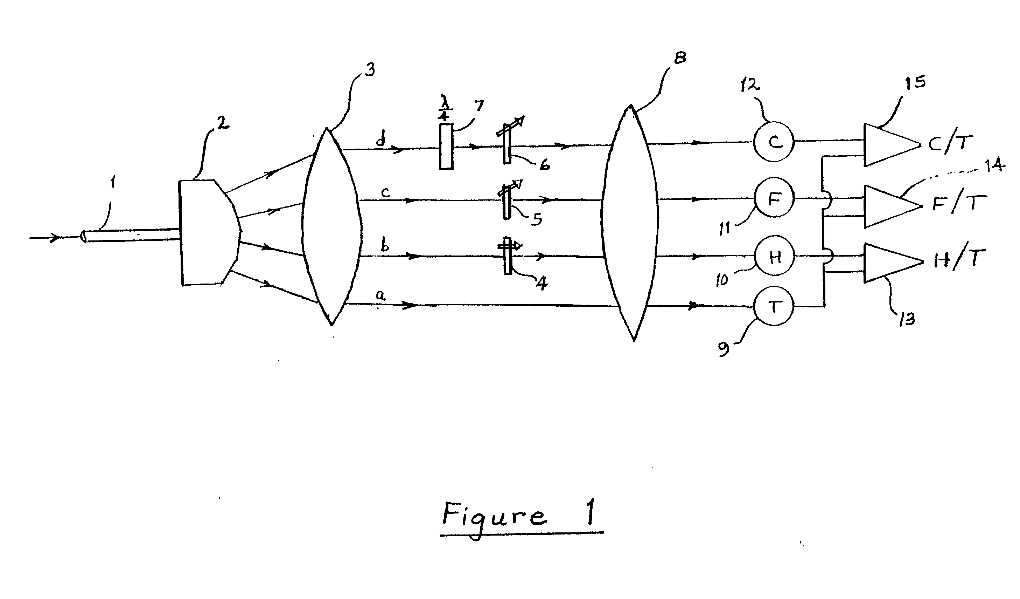

Referring to Figure 1, the incident light beam enters the device through a single-mode optical fiber 1, which is designed to provide spatial filtering of the beam according to well-known phenomena. The beam proceeds into a beam splitter 2, which splits the beam into four separate beams as shown in the drawing. These four beams are then collimated by a lens 3, shown in the drawing as a single element. The four beams are sufficiently separated to allow different optical elements to be placed in their path. In the drawing the beams are denoted by the letters "a", "b", "c", and "d" for clarity.

The beam labelled "b" passes through a linearly polarizing element 4 having a horizontal polarization axis. Beam "c" passes through a similar linear polarizer 5 having a polarization axis oriented at a 45 degree angle about the optic axis relative to the polarizer 4. Beam "d" passes through a quarter-wave plate 7, and then through a linearly polarizing element 6 that is oriented in the same direction as polarizer 5; this combination is a circular polarizer. Finally, beam "a" has no polarizing elements in its path.

The four beams then are focused by the lens 8 into a four-detector array; each of the beams a - d is focused on its respective photodetector, 9 - 12, and substantially absorbed. Each detector generates an electrical signal that is proportional to the intensity of the light absorbed by the detector. Thus in the drawing, detector 9 generates an electrical signal of amplitude T; detector 10 generates a signal H, detector 11 generates a signal F, and detector 12 generates a signal C.

The output signals of the detectors 9 - 12 are transmitted to the ratiometers 13 - 15 as shown in the drawing. (Since this drawing is schematic, the ratiometers are shown as individual elements. In actual implementations of the invention, however, they may be inseparable components of other electronic devices such as a digital computer.) Signals T and H are transmitted to the ratiometer 13, which generates an output electrical signal of amplitude H/T. Similarly signals T and F are fed into ratiometer 14 which produces the signal F/T, and signals T and C feed into ratiometer 15, generating C/T. These electronic components are not described here in further detail; they are well known in the art and may be constructed according to methods that are understood by persons of reasonable skill.

The amplitude of the electrical signals produced by the ratiometers 13 - 15 may be used to determine the Stokes parameters of the original light beam. For purposes of this discussion we refer to the definition of the Stokes parameters set forth in the well-known treatise entitled "Principles of Optics", by M. Born and E. Wolf (Pergamon Press, 4th Edition; London 1970; pages 30 - 32). These parameters are denoted by the symbols "$s_0$", "$s_1$", "$s_2$", and "$s_3$", and specification of all 4 of these quantities completely determines the state of polarization of a light beam. The quantity $s_0$ is simply the total light intensity. The degree of polarization is given by the expression:

$$(1) \qquad D = \frac{\sqrt{s_1{}^2 + s_2{}^2 + s_3{}^2}}{s_0} \ .$$

The electrical output signals of the ratiometers and the signal T are related to the Stokes parameters by the expressions:

$$(2) \qquad s_1 = 2T\left(\frac{H}{T} - \frac{1}{2}\right) ;$$

$$(3) \qquad s_2 = 2T\left(\frac{F}{T} - \frac{1}{2}\right) ;$$

$$(4) \qquad s_3 = 2T\left(\frac{C}{T} - \frac{1}{2}\right), \quad where \quad s_0 = T \ .$$

The Stokes parameters "$s_1$", "$s_2$", and "$s_3$" may therefore be determined from the ratiometer output signals by the above equations. Such calculations may be carried out automatically, either by analog or digital means, and displayed in any form desired. The electronic components and circuits required to carry out these calculations are well known to persons skilled in the art of the present invention, and need not be specified in further detail. Examples of this technology are described in the references discussed above.

The beam alignment and positioning problems inherent in the Azzam and Collett devices are solved in the present invention by using the optical single-mode fiber to introduce the light beam into the meter. It is well known that such a fiber acts as a spatial filter, so that the direction and distribution of the incoming light is well determined. However it is also known that such fibers may become birefringement under mechanical strain such as bending, and thereby affect the polarization of the incident light beam and the accuracy of the polarization measurement. Therefore the proper calibration of the present instrument must compensate for any polarization effects induced by the fiber. This may be done in the following manner.

The polarizing effects of the fiber may be generally written as a 3 x 3 matrix denoted by the symbol [T] because the fiber does not change the degree of polarization. An incoming beam with unit degree of polarization described by the column matrix [p] will be transformed into an output beam of polarization [p'] where both [p] and [p'] have 3 rows whose elements are the ratios: $s_1/s_0$, $s_2/s_0$, and $s_3/s_0$. The transformation may be written as a matrix product:

(5)    [p'] = [T] x [p] .

and a knowledge of all the elements of the matrix [T] will determine the correction to be made. This may be carried out by known methods. Since [T] is an orthonormal matrix, only 5 elements are independent, and [T] has an inverse, which we denote by [T⁻¹].

One can completely determine the matrix [T] by successively introducing two different beams of linearly polarized light and measuring the polarizations with this meter. The polarization directions of these two beams are preferably at an angle of 45 degrees relative to each other. If we assume the first beam is horizontally polarized, and the second beam is polarized at an angle of 45 degrees, then the polarization of the first beam emerging from the fiber may be written as a 3-row column matrix [H], and the emerging polarization of the second beam is the column matrix [F]. Column [H] and column [F] are in fact the first two columns of the matrix [T]. The third column of this matrix is the polarization of the emerging beam when the incident beam is circularly polarized and it is completely determined by [H] and [F], since [T] is orthonormal. Therefore these two measurements determine the correction that must be made for the polarizing effects of the fiber. The desired state of polarization is obtained by multiplying the measured state of polarization by [T⁻¹]:

(6)    $[p] = [T^{-1}] \times [p]_{measured}$ .

The computation of this calibration correction may be carried out electronically and automatically by means of well known techniques, and are not specified further here. Clearly the calibration of the meter at different wavelengths is a simple and straightforward matter.

This polarization meter can operate in the range of wavelengths over which the input fiber 1 supports a single mode of propagation. For example, a standard long-haul telecommunications fiber manufactured by Corning Glass for 1.3 micron transmission can support a single propagation mode over the wavelength range of 1.2 - 1.6 microns. Since the meter has no moving parts, its measurement frequency is limited only to the frequency response of the photodetectors, which may easily exceed 1 GHz. It is simple and inexpensive to construct, and is especially suited for measurements of rapidly changing optical signals.

It may be noted that while the collimating and focusing lenses are described here as single elements, clearly there could be a plurality of such lenses along with other optical transport elements. Indeed, these lenses could be replaced by equivalent elements, such as mirrors, without affecting the essential features of the invention.

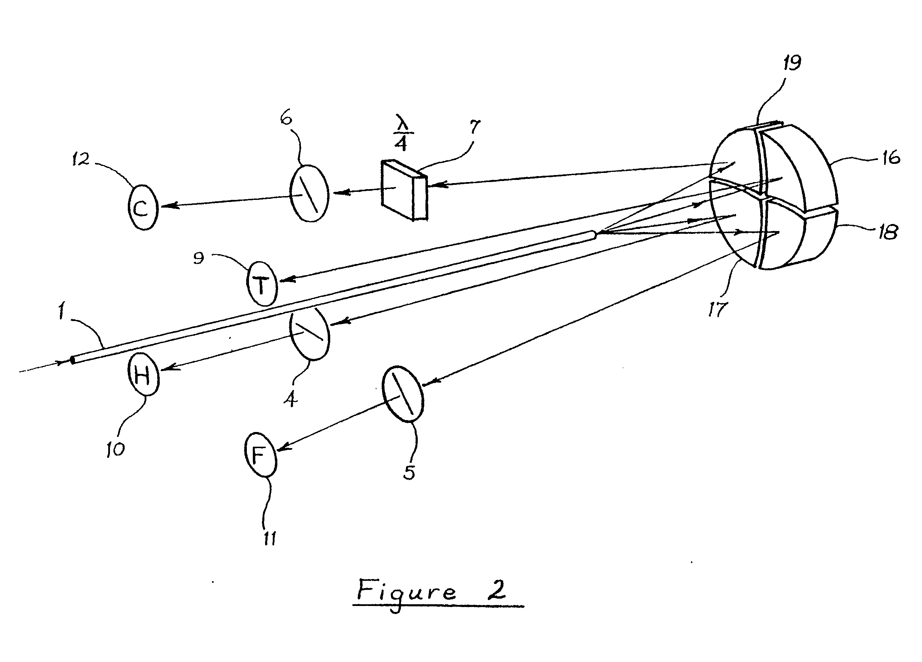

Furthermore, these optical elements could be combined with other elements in various ways while maintaining the integrity of the underlying invention. For example, Figure 2 shows an alternative embodiment of this invention in which the beam splitter 2 and lenses 3, 8 are replaced by a focusing concave mirror sectioned into independently movable quadrants, 16, 17, 18, and 19. Each quadrant is adjusted to focus the portion of the light beam impinging on it onto the corresponding detectors 9 - 12 through the optical elements 4 - 7. The adjustment mechanism for the quadrant mirror sections is not shown in this schematic sketch, since it can be designed easily by persons of reasonable skill in this art. The efficiency and accuracy of this version of the invention, as well as the previously described embodiment, are enhanced by the spatial filtering function of the single-mode optical fiber 1, which ensures that the light is evenly distributed among the detection quadrants.

The foregoing description of the invention has been presented for purposes of illustration and description. It is not intended to be exhaustive or to limit the invention to the precise form disclosed, and obviously many modifications and variations are possible in light of the above teaching. The embodiment is chosen and described in order to best explain the principles of the invention and its practical applications to thereby enable others skilled in the art to best utilize the invention in various embodiments and with various modifications as are suitable to the particular use contemplated. It is intended that the spirit and scope of the invention are to be defined by reference to the claims appended hereto.

## Claims

1. A meter for measuring the polarization of a beam of light, comprising:
   (a) means for splitting said beam of light into a plurality of partial beams, and such that the number of said partial beams is not less than four;
   (b) a plurality of optical elements located in the path of three of said partial beams, such that the light transmitted through said optical elements in each of said partial beams has unit degree of polarization;
   (c) a plurality of optical detectors, each of said detectors being in the path of one of said partial beams, such that said detectors measure the intensity of the light transmitted in said partial beam;

and
(d) means for computing the polarization of said beam of light from said measurements of the transmitted intensity of said partial beams.

2. A meter as recited in claim 1, further comprising an optical spatial filter through which said beam of light passes and enters said meter, such that the intensity distribution of the light entering is substantially uniform about the axis of said beam.

3. A meter as recited in claim 2, wherein said spatial filter comprises a single-mode optical fiber.

4. A meter as recited in one of claim 1 to 3, such that the light transmitted through said optical elements in one of said partial beams is linearly polarized, the light transmitted through said optical elements in a second of said partial beams is linearly polarized in a direction rotated substantially 45 degrees about the optic axis relative to the polarization direction of said first partial beam, and the light transmitted through said optical elements in the third of said partial beams is substantially circularly polarized.

5. A meter as recited in one of claims 1 to 4, further comprising means for focusing said partial beams through said optical elements and onto said detectors.

6. A meter as recited in one of claims 1 to 5, wherein said means for computing said polarization comprises electronic components that calculate and display the Stokes parameters of said polarization.

7. A method for determining the polarization of a beam of light, comprising the steps of:
(a) splitting said beam into four partial beams;
(b) linearly polarizing one of said beams;
(c) linearly polarizing a second of said beams in a direction having an angle of 45 degrees relative to the polarization direction of said first beam;
(d) circularly polarizing a third of said beams;
(e) measuring the intensity of each of the resulting four partial beams;
(f) dividing said intensity of each of the resulting polarized partial beams by the intensity of the fourth partial beam; and
(g) calculating the Stokes parameters of the original light beam from the quotients thereby obtained in the preceding step.

6

Figure 1

EP 0 439 127 A2

Figure 2

EP 0 439 127 A2